# DEMANDE DE BREVET EUROPEEN

(11) **EP 0 769 626 A1**
(43) Date de publication de la demande: **23.04.1997**
(21) Numéro de dépôt: 96402213.1
(22) Date de dépôt: 16.10.1996
(51) Int. Cl.: F16B 45/02, H02G 1/02

(54) **Crochet d'ammarage verrouillable à mémoire mécanique**

(30) Priorité: 18.10.1995 FR 9512223
(71) Demandeur: ELECTRICITE DE FRANCE Service National, 75008 Paris (FR)
(72) Inventeur: Vallée, Patrick, 84160 Cadenet (FR)
(74) Mandataire: Dubois-Chabert, Guy

(57) **Abrégé**

Le crochet permet d'emprisonner un câble de traction (2) sans que celui-ci ne puisse s'échapper de sa position de traction, les moyens de verrouillage étant bistables et automatiques.

Le crochet est constitué principalement d'un corps (10) dans lequel se trouve une fente d'accès (12) et une fente de traction (15). Un loquet (20) obstrue, par ses deux doigts (21D, 21G), l'une des deux fentes, grâce à deux positions stables. Une aiguille d'orientation (40) du câble (2) est montée pivotante autour du loquet (20) et se place également dans deux positions stables d'orientation du câble (2).

Application à l'héliportage de nacelles.

## Description

### Domaine de l'invention

L'invention concerne l'entretien et la réparation des câbles aériens, tels que les câbles électriques du réseau public de distribution de l'électricité. Elle peut également s'appliquer à des câbles utilisés dans les moyens de transport, tels que les téléphériques et les télécabines, dès l'instant que ces câbles peuvent supporter le poids supplémentaire d'une nacelle d'entretien. L'invention concerne également, mais indirectement, l'héliportage.

Le crochet selon l'invention peut trouver de nombreuses autres applications dans différents domaines de l'industrie, dès l'instant qu'il y a traction d'un câble sur un dispositif.

### Art antérieur et problème posé

La plupart des câbles aériens nécessitent, une fois qu'ils sont installés, de nombreuses opérations d'entretien, de réparation et d'aménagement. Ceci est notamment le cas pour le réseau public de distribution d'énergie électrique où l'Electricité de France doit assurer de nombreuses interventions diverses.

Dans ce cadre, il est connu d'utiliser des nacelles héliportées à bord desquelles sont embarqués du matériel et généralement des opérateurs. Un hélicoptère amène la nacelle auprès du câble sur lequel l'intervention doit avoir lieu et peut, dans certains cas, la laisser accrocher sur le câble. La nacelle est alors abandonnée par l'hélicoptère, pendant que les opérateurs interviennent sur ce câble à bord de la nacelle.

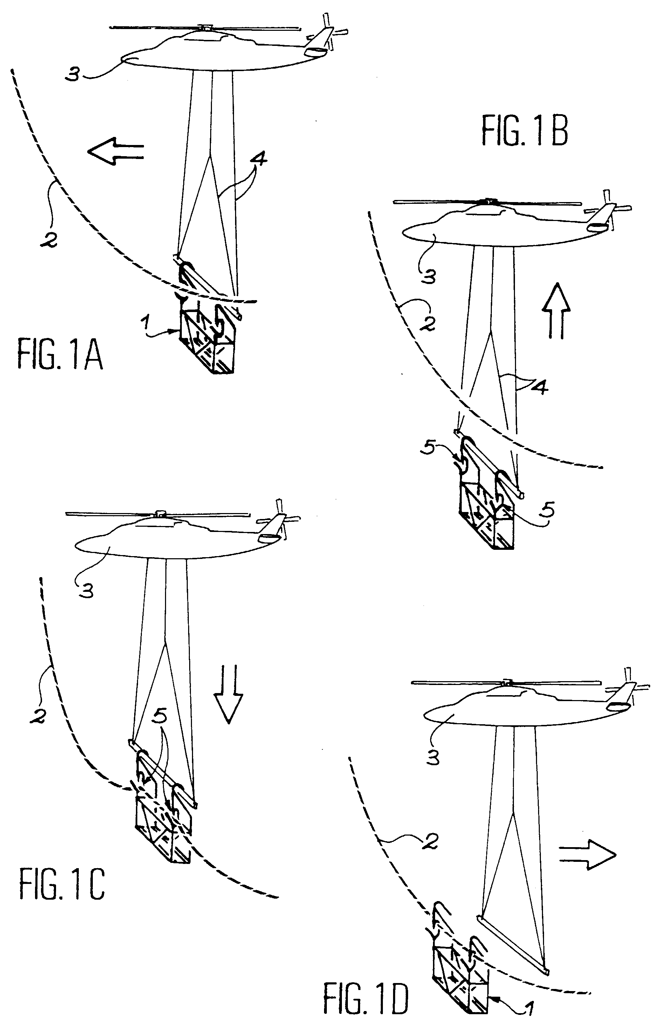

La série de figures 1A à 1D montre la manoeuvre d'accrochage d'une nacelle 1 sur un câble 2 au moyen d'un hélicoptère 3 auquel est suspendu un système d'élingues 4.

Selon la figure 1A, l'hélicoptère 3 fait une manoeuvre d'approche de la nacelle 1 auprès du câble aérien 2. La flèche indique la direction d'évolution de l'hélicoptère 3 qui va ainsi venir faire entrer en contact le câble aérien 2 avec le système d'élingues 4.

Sur la figure 1B, l'hélicoptère 3, comme l'indique la flèche, remonte, toujours en maintenant les élingues 4 en contact avec le câble aérien 2. Cette manoeuvre se termine lorsque le câble aérien 2 arrive dans les crochets 5.

En référence à la figure 1C, l'hélicoptère 3 procède alors à une manoeuvre de redescente pour que le câble aérien 2 pénètre dans une fente verticale des crochets 5.

Comme le montre la figure 1D, une fois la nacelle 1 amarrée sur le câble aérien 2, l'hélicoptère 3 peut faire marche arrière et repartir.

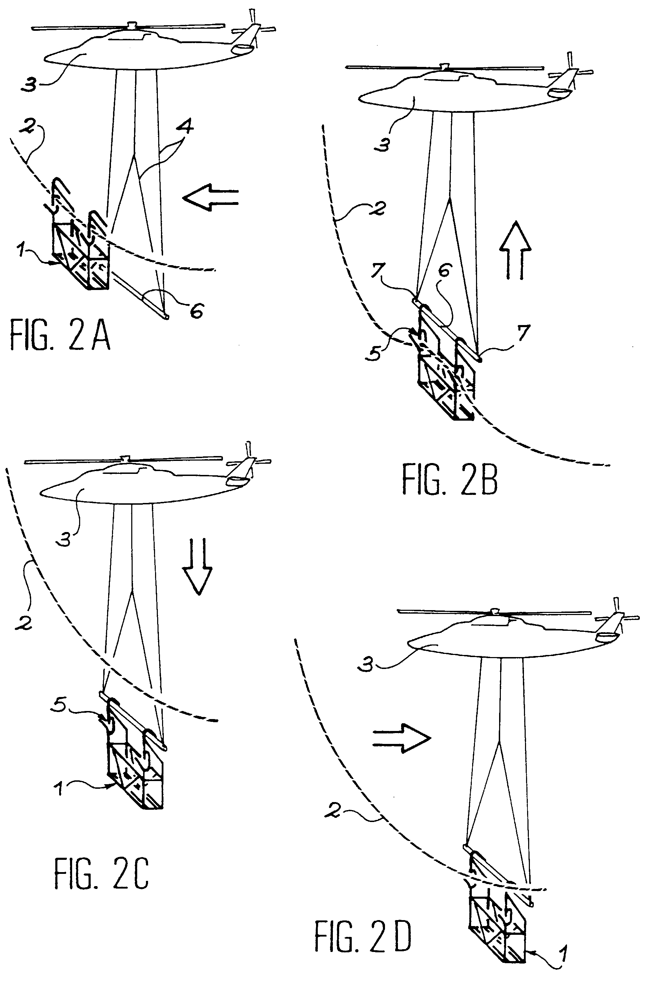

En référence à la figure 2A, l'opération de décrochage de la nacelle 1, débute par l'arrivée de l'hélicoptère 3 dans le sens indiqué par la flèche. Celui-ci place la barre d'accrochage 6 suspendue aux élingues 4 sur le flanc de la nacelle 1, par le bas.

Comme le montre la figure 2B, l'hélicoptère 3 remonte alors pour que cette barre d'accrochage 6 vienne se loger sous des crochets de transport 7. L'hélicoptère 3 continue à monter légèrement pour que le câble 2 se dégage des crochets 5. Compte tenu du fait que la sortie de ces crochets est légèrement inclinée, un mouvement de redescente de l'hélicoptère 3 illustré par la figure C, permet au câble 2 de se dégager par rapport aux crochets 5 de la nacelle 1.

Comme le montre la figure 2D, l'hélicoptère 3 peut alors effectuer une manoeuvre en marche arrière pour dégager la nacelle 1 du câble 2.

Or, les normes de sécurité imposent que l'amarrage de la nacelle sur le câble soit effectué de manière sûre. On s'impose que, une fois la nacelle installée sur le câble, ce dernier ne puisse pas sortir du ou des crochet(s) dans le(s)quel(s) il a été positionné. Au moment d'évacuer la nacelle, un déverrouillage peut alors avoir lieu pour permettre le décrochage de la nacelle.

Le but de l'invention est de permettre à une nacelle déposée sur un câble aérien d'être fixée par un système ne permettant pas aux câbles de s'échapper, en cas de fausse manoeuvre de l'hélicoptère, sur la nacelle.

Un autre but est de proposer un système de mise en place de la nacelle sur un câble aérien de façon automatique et sans intervention humaine sur la nacelle.

### Résumé de l'invention

L'objet principal de l'invention est un crochet d'amarrage verrouillable pour maintenir accroché un câble de traction à un dispositif, le câble de traction devant transmettre au crochet une traction dans une direction de traction déterminée, le crochet d'amarrage comprenant principalement un corps dans lequel sont prévues :
- une fente de traction sensiblement parallèle à la direction de traction avec une première extrémité supérieure vers la direction de traction destinée à recevoir le câble de traction ; et
- une fente d'accès, orientée pour faire un angle inférieur à 45° avec la fente de traction, et comprenant une première extrémité débouchant à l'extérieur du crochet et une deuxième extrémité inférieure en communication avec une deuxième extrémité de la fente de traction opposée à l'extrémité de traction de cette première fente de traction.

Selon l'invention, le crochet comprend des moyens de verrouillage automatique du câble dans la fente de traction, quand celui-ci pénètre dans la fente de traction, par obturation de la fente d'accès et des moyens d'orientation du câble dans l'une ou l'autre des fentes de traction ou d'accès, quand le câble est placé dans la deuxième extrémité inférieure commune aux deux fentes.

Dans leur réalisation préférentielle, les moyens de verrouillage automatique sont constitués d'un loquet pivotant autour d'un premier axe A perpendiculaire au plan défini par les deux fentes, placé entre celles-ci et possédant deux positions stables, grâce à des premiers moyens élastiques de rappel, le loquet possédant deux doigts de verrouillage placés en saillie du loquet, pour que dans la première position stable, le premier doigt de verrouillage obstrue la fente d'accès tout en laissant la fente de traction libre et pour que dans une deuxième position stable, le deuxième doigt de verrouillage obstrue la fente de traction en laissant la fente d'accès libre, ces deux doigts étant escamotables par le câble lorsque ce câble sort de la fente d'accès ou va au fond de la fente de traction à partir de la deuxième extrémité inférieure commune aux deux fentes.

De préférence, les deux doigts sont décalés angulairement d'environ 90°.

Le crochet se complète avantageusement de moyens d'orientation du câble dans le crochet, comprenant principalement une aiguille montée pivotante autour de l'axe A perpendiculaire au plan des deux fentes pour obstruer soit la fente d'accès par une première position stable, soit la fente de traction par une deuxième position stable.

Les premiers moyens de rappel élastique du loquet sont de préférence constitués d'un premier organe de traction monté pivotant par une première extrémité dans le corps du crochet sur un deuxième axe B et monté fixe sur le loquet par une deuxième extrémité, sur un troisième axe C de façon excentrée par rapport au premier axe A.

Le loquet se complète avantageusement de butée en rotation sous la forme d'un plot central agissant sur les doigts de verrouillage.

Les deuxièmes moyens élastiques sont de préférence réalisés par un deuxième organe de traction monté pivotant sur le loquet au même troisième axe C excentré par une première extrémité et fixé à un quatrième axe D à l'extrémité de l'aiguille par une deuxième extrémité.

Les deux organes de traction peuvent être réalisés chacun sous la forme d'un ressort travaillant en compression dans deux tubes coulissants.

Dans l'application du crochet selon l'invention à l'héliportage, le premier ressort de l'organe de traction constituant les premiers moyens de rappel élastiques exerce une force cinq fois plus importante que le deuxième ressort de l'organe de traction constituant les deuxièmes moyens élastiques de rappel.

Une nacelle équipée de crochets conforme à l'invention peut ainsi être mise en place sur un câble aérien de façon automatique et sans intervention humaine.

### Liste des figures

L'invention et ses différentes caractéristiques techniques seront mieux comprises à la lecture de la description qui suit, complétée de plusieurs figures représentant respectivement :
- figures 1A, 1B, 1C, et 1D des schémas représentatifs de la manoeuvre d'accrochage à un câble par héliportage d'une nacelle pouvant utiliser les crochets selon l'invention ;
- figures 2A, 2B, 2C et 2D, des schémas relatifs aux opérations de décrochage de cette même nacelle ;
- figures 3A, 3B, 3C, 3D, 3E et 3F, des schémas relatifs au fonctionnement du crochet selon l'invention dans l'accrochage à un câble ;
- figures 4A, 4B, 4C et 4D, des schémas relatifs au crochet selon l'invention pendant le décrochage du même câble ; et
- figure 5, en coupe, une réalisation du crochet selon l'invention.

### Description détaillée d'une réalisation de l'invention

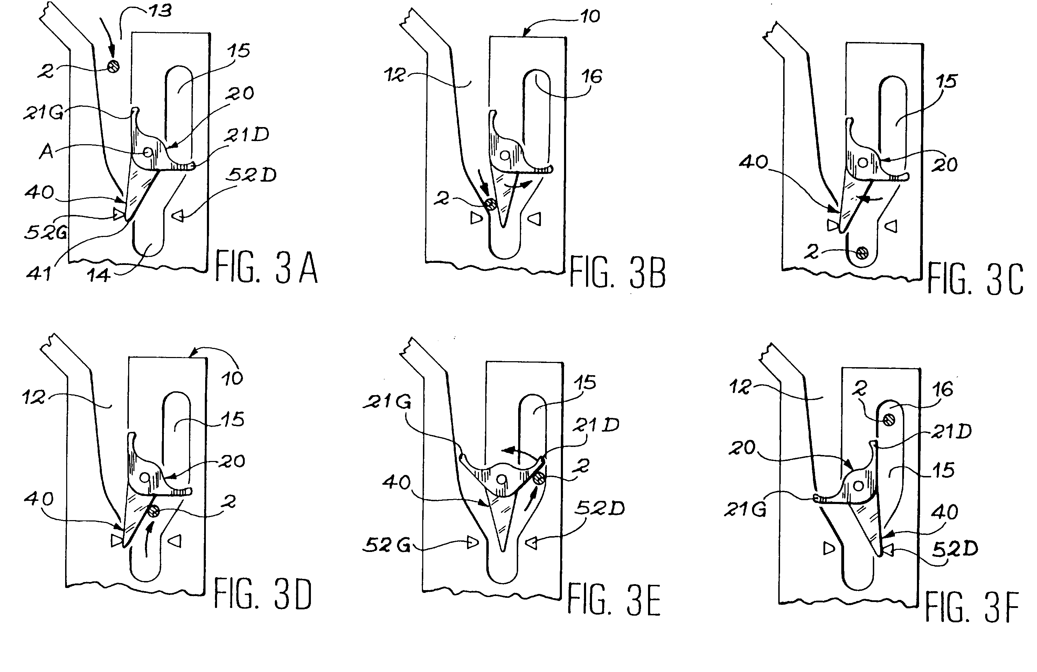

En référence à la figure 3A, le crochet possède un corps 10 dans lequel se trouve une fente d'accès 12 et une fente de traction 15. Comme le suggère la figure 1B, le câble 2 doit arriver dans le crochet par le haut. Un bras de guidage 11 incliné vers l'extérieur permet de guider le câble 2 dans la fente d'accès 12 où il pénètre par une première extrémité 13. La fente d'accès 12 a donc une direction sensiblement verticale très légèrement inclinée pour se terminer par une deuxième extrémité inférieure 14. Dans cette dernière aboutit également la fente de traction 15 qui remonte vers le haut jusqu'à une deuxième extrémité de traction 16, toujours dans une direction sensiblement verticale. On constate que l'orientation de ces deux fentes est telle qu'elles forment un angle inférieur à 45° ouvert vers le haut du corps 10 du crochet. On comprend ainsi que le câble 2 puisse descendre par la fente d'accès 12, arriver dans la deuxième extrémité commune 14 des deux fentes et remonter vers la première extrémité de traction 16 de la fente de traction 15 pour y être bloquer et exercer l'effort de traction.

Deux éléments complètent le crochet selon l'invention. Il s'agit d'un loquet 20 et d'une aiguille 40, tous deux montés pivotants sur un même premier axe A, perpendiculaire au corps 10 du loquet qui peut s'apparenter à une plaque. En d'autres termes, cet axe de rotation A est perpendiculaire au plan défini par les deux fentes d'accès 12 et de traction 15. Ce loquet 20 et cette aiguille 40 ont chacun deux positions angulaires stables.

De plus, le loquet 20 possède deux doigts de verrouillage, un doigt gauche 21G et un doigt droit 21D. Leur positionnement angulaire respectif a son importance. En effet, lorsque le crochet selon l'invention est prêt à être utilisé, les éléments du crochet se trouvent dans la configuration de la figure 3A. Le loquet 20 est tourné vers la droite, c'est-à-dire que son doigt de verrouillage gauche 21G n'obstrue pas la fente d'accès 12. Par contre, le doigt droit 21D obstrue la fente de traction 15. De ce fait, le câble 2 peut descendre dans la fente d'accès 12, jusqu'au moment où il rencontre l'aiguille 40.

En effet, l'aiguille 40 possède deux positions stables définies par deux butées latérales 52G, 52D agissant sur l'extrémité 41 de l'aiguille 40. Dans ces deux positions, l'aiguille 40 obstrue au câble 2 l'accès à l'extrémité supérieure 16 de la fente de traction 15 ou l'accès à l'extrémité d'accès 13 de la fente d'accès 12. Dans la situation de la figure 3A, l'aiguille 40 obstrue le bas de la fente d'accès 12.

L'aiguille 40 possède des moyens de rappel élastiques pour l'obliger à venir dans une de ces deux positions stables, c'est-à-dire contre les butées latérales 52G, 52D. Or, la résistance de ces moyens de rappel élastiques n'est pas importante. En conséquence, comme le montre la figure 3B, si l'hélicoptère porteur de la nacelle et du crochet continue à monter, le câble 2 pénètre dans le bas de la fente d'accès 12 en forçant l'aiguille 40 et arrive dans l'extrémité inférieure 14 des deux fentes.

Lorsque le câble 2 n'agit plus sur l'aiguille 40, celle-ci revient dans sa position initiale, stable, c'est-à-dire vers la gauche (voir figure 3C).

A cet instant symbolisé par la figure 3D, si l'hélicoptère descend, le câble 2 remonte et est obligé d'emprunter la fente de traction 15, compte tenu du fait que l'aiguille 40 lui obstrue la fente d'accès 12. En référence à la figure 3E, le câble est alors confronté au doigt droit 21D du loquet 20 qui obstrue la fente de traction 15. Or, compte tenu du poids de la nacelle solidaire du crochet 10, si l'hélicoptère continue sa descente, la force appliquée au crochet 10 sera suffisante pour que le câble 2 puisse vaincre la résistance du doigt droit 21D du loquet 20. Ce dernier va donc tourner comme l'indique la flèche supérieure.

En considérant la figure 3F, le câble 2 se trouve alors prisonnier dans la fente de traction, et peut venir en contact du corps 10 du crochet dans la première extrémité dite de traction 16, c'est-à-dire l'extrémité supérieure de la fente de traction 15. Toutefois, on constate que le passage du câble 2 au-dessus du loquet 20 repousse complètement le doigt droit 21D dans une position où il n'obstrue plus la fente de traction, mais où le doigt gauche 21G obstrue la fente d'accès 12. Compte tenu du fait que la résistance à la rotation du loquet 20, c'est-à-dire de la dureté des moyens de rappel élastiques de ce dernier, le câble 2 est emprisonné dans le loquet avec une sécurité suffisante.

D'autre part, les positions stables de l'aiguille 40 sont définies par rapport à l'orientation du loquet 20. Ce dernier ayant pivoté, la position stable de l'aiguille 40 se trouve alors vers la droite, en appui sur la butée latérale droite 52D. Le crochet est alors en position de fonctionnement, l'aiguille 40 étant déjà en position favorable pour un éventuel décrochage.

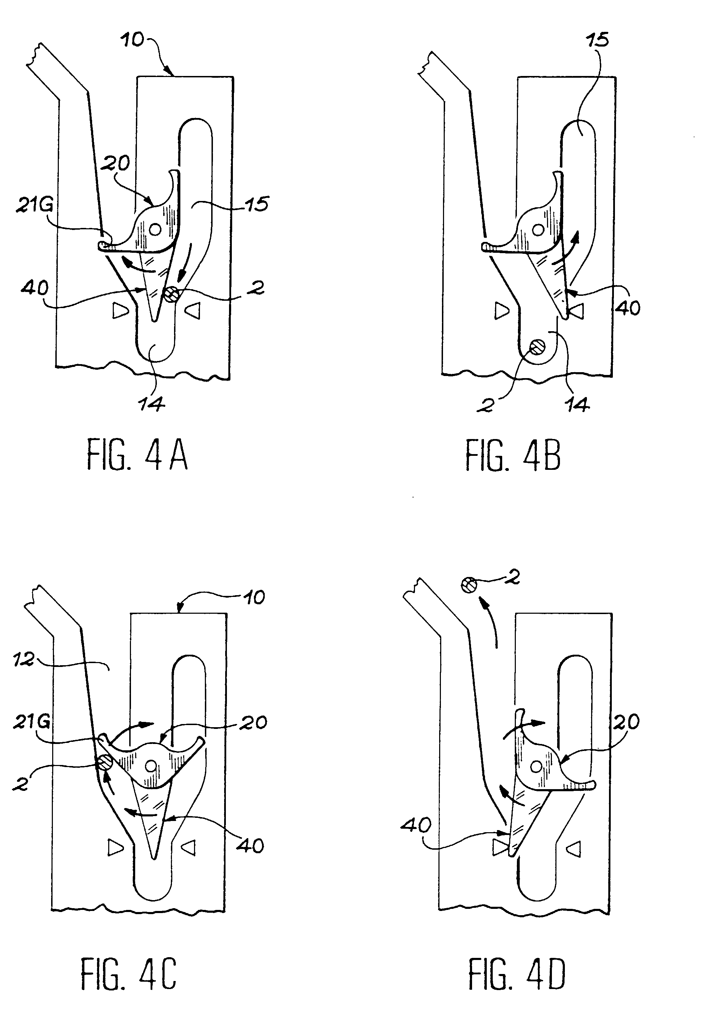

Les figures 4A à 4D décrivent un tel décrochage. En effet, sur la figure 4A, le crochet 10 est remonté par rapport au câble 2 qui descend dans la fente de traction 15 vers l'extrémité inférieure 14. Pour cela, il dévie l'aiguille 40 légèrement vers la gauche sans toucher au loquet 20.

Comme le montre la figure 4B, le câble 2 arrive au fond de la deuxième extrémité inférieure 14 et commune aux deux fentes, l'aiguille 40 ayant repris sa position stable vers la droite, position qu'elle occupait lorsque le câble 2 était emprisonné dans la fente de traction 15.

La figure 4C montre que si le crochet 10 descend, le câble 2 est orienté vers la gauche par l'aiguille 40 qui est restée à droite et emprunte la fente d'accès 12 pour remonter vers la sortie du crochet 10. Si ce mouvement se continue, le câble 2 pousse le bras gauche 21G du loquet 20, suffisamment pour que celui-ci pivote vers la droite et bascule dans la position stable initiale de la figure 3A. Le câble 2 est alors libéré et peut être détaché du crochet 10. Le loquet 20 et l'aiguille 40 ont alors des positions initiales de la figure 3A, c'est-à-dire que le crochet est prêt à être réutilisé pour un nouvel accrochage.

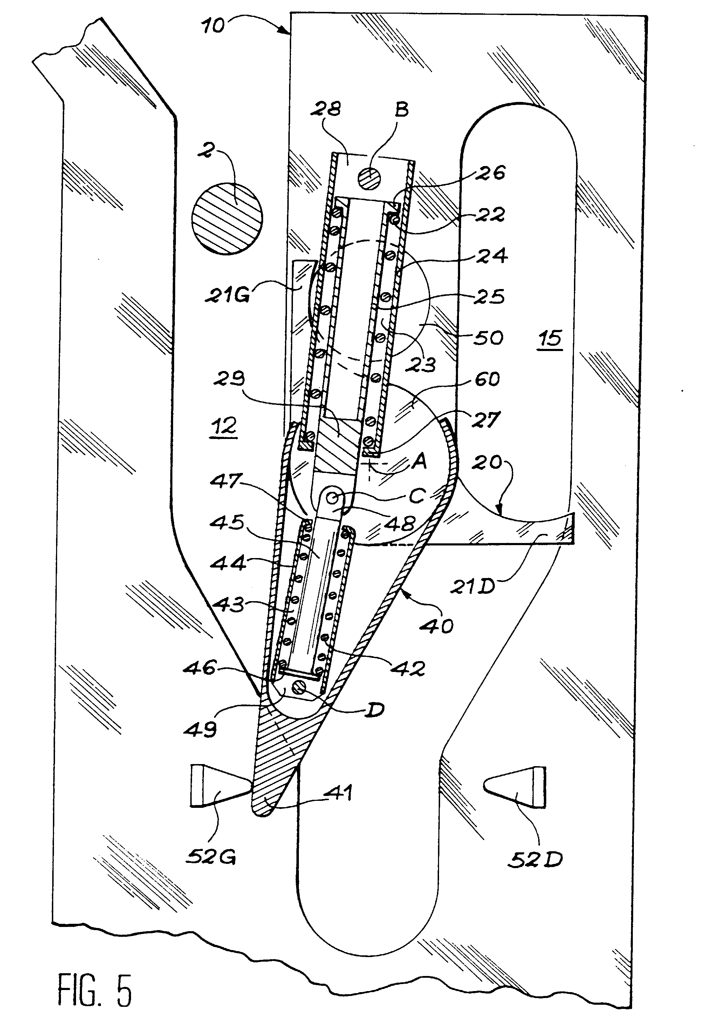

La figure 5 permet de voir une réalisation possible du loquet 20 et de l'aiguille 40, notamment concernant leurs deux positions stables. En fait, ces deux éléments sont équipés des deux mêmes moyens élastiques de rappel. Ces moyens sont constitués principalement, dans chacun des cas, par un organe de traction constitué d'un ressort 22 ou 42 emprisonné dans un espace annulaire relativement long 23, 43 compris entre deux tubes concentriques respectifs 24, 25 et 44, 45. De plus, chacun de ces tubes est solidaire d'une butée respectivement 26, 27 et 46, 47. De la sorte, chacun des deux ressorts 22, 42 est maintenu comprimé par deux butées 26, 27, 46, 47. Ces ressorts 22 et 42 seront d'autant plus comprimés que les deux tubes 24 et 25, d'une part, 43 et 44, d'autre part, coulisseront pour faire rapprocher les butées respectives 26, 27 et 46, 47.

Le tube extérieur 24 des premiers moyens de rappel élastiques est fixé, par une première extrémité 28, à un deuxième axe B, parallèle au premier axe A, placé au centre du crochet 10. Le tube interne 25 de ce même moyen de rappel élastique est fixé, par une deuxième extrémité, à un troisième axe C solidaire de la base 60 de l'aiguille 40, mais de manière excentrée par rapport au premier axe A. On comprend ainsi que, si le loquet 20 pivote, le troisième axe C pivotera autour du premier axe A et le ressort subira une légère compression. Compte tenu du fait que le ressort 22 cherche en permanence à se détendre, il a tendance à attirer l'ensemble des deux tubes concentriques 24 et 25 vers des positions latérales excentrées par rapport au premier axe A. On comprend alors que, si on dispose une butée derrière ces premiers moyens de rappel élastiques, sous la forme d'un plot 50, on oblige les deux bras 21G et 21D du loquet 20 à venir en butée contre ce plot 50 sous l'effet du premier ressort 22. Ceci permet de définir les deux positions stables du loquet 20.

Le changement de position du troisième axe C permet également de définir les deux positions stables de l'aiguille 40. En effet, les deuxièmes moyens élastiques de rappel sont constitués par un organe de traction identique monté par une première extrémité 48 autour de ce troisième axe C. La deuxième extrémité 49 de ces deuxièmes moyens de rappel élastique est montée pivotante sur un quatrième axe D placé vers l'extrémité 41 de l'aiguille 40.

Compte tenu du fait que cette dernière est montée pivotante autour du premier axe A et que le ressort 42 est comprimé, il a tendance à se détendre et à ramener le quatrième axe D le plus près possible du premier axe C. Il s'ensuit donc une rotation de l'aiguille 40 vers la gauche quand le troisième axe C est vers la gauche. Les positions stables vers la gauche et vers la droite sont donc obtenues de cette manière, en coopération avec les butées latérales 52.

On comprend également que le changement de position du loquet 20, c'est-à-dire le pivotement du troisième axe C autour du premier axe A impose un changement de position stable pour l'aiguille 40, comme cela est illustré sur les figures 3A à 4D.

Dans la réalisation décrite, et compte tenu de l'orientation respective des deux fentes, le décalage angulaire des deux bras 21G et 21D du loquet 20 est d'environ 90°. Ceci n'est qu'une réalisation possible, le principe pouvant être adapté à des formes différentes.

On note que le premier ressort 22 des premiers moyens de rappel élastiques est beaucoup plus puissant que le deuxième ressort 42 des deuxièmes moyens de rappel élastiques. Ceci s'explique par le fait que le loquet 20 doit assurer le maintien du câble dans le crochet selon l'invention et résister à certaines sollicitations relativement importantes. Par contre, l'aiguille 40 n'a pour mission que de guider le câble 2 lors de ses déplacements dans les fentes 12 et 15. En conséquence, le deuxième ressort 42 peut avoir une force de rappel cinq fois moins importante que la force de rappel du premier ressort 22. Dans l'application au supportage des nacelles héliportées, le premier ressort peut avoir une force de rappel de l'ordre de 75 daN, alors que le deuxième ressort 42 peut avoir une force de rappel de l'ordre de 15 daN.

## Revendications

1. Crochet d'amarrage verrouillable pour maintenir accroché un câble de traction (2) devant transmettre au crochet une traction dans une direction déterminée, le crochet comprenant :
- un corps (10) dans lequel sont prévues :
. une fente de traction (15) sensiblement parallèle à la direction de traction avec une première extrémité de traction (16) dans la direction de traction et destinée à recevoir le câble de traction (2) ; et
. une fente d'accès (12) orientée de manière à faire un angle déterminé avec la fente de traction (15) inférieur à 45° et comprenant une première extrémité d'accès (13) débouchant à l'extérieur du crochet et une deuxième extrémité inférieure (14) et constituant également la deuxième extrémité de la fente de traction (15) opposée à l'extrémité de traction (16),
caractérisé en ce qu'il comprend des moyens de verrouillage automatique du câble (2) dans la fente de traction (15) quand celui-ci pénètre dans la fente de traction (15), par obturation de la fente d'accès (12), et des moyens d'orientation du câble (2) dans l'une ou l'autre des fentes de traction (15) ou d'accès (12) quand le câble (2) est placé dans la deuxième extrémité inférieure (14) commune aux deux fentes (12, 15).

2. Crochet selon la revendication 1, caractérisé en ce que les moyens de verrouillage automatique comprennent un loquet (20) pivotant par rapport à un premier axe (A) perpendiculaire au plan défini par les deux fentes (12, 15) et placé entre celles-ci, le loquet (20) possédant deux positions stables, grâce à des premiers moyens élastiques de rappel et possédant deux doigts (21D, 21G) de verrouillage, placés en saillie du loquet (20) pour que, dans une première position stable, le premier doigt de verrouillage (21G) obstrue la fente d'accès (12) alors que la fente de traction (15) reste non obturée par le deuxième doigt (21D) et pour que, dans la deuxième position stable, le deuxième doigt de verrouillage (21D) obstrue la fente de traction (15), alors que la fente d'accès (12) reste libérée par le premier doigt de verrouillage (21G), ces deux doigts de verrouillage (21D, 21G) étant escamotables par le câble (2), lorsque le câble (2) sort de la fente d'accès (12) ou qu'il va à l'extrémité de traction (16) de la fente de traction (15) à partir de la deuxième extrémité commune et inférieure (14) des deux fentes (12, 15).

3. Crochet selon la revendication 2, caractérisé en ce que les deux doigts de verrouillage (21G, 21D) sont décalés angulairement d'environ 90°.

4. Crochet selon la revendication 1, caractérisé en ce que les moyens d'orientation comprennent :
- une aiguille (40) montée pivotante autour du premier axe (A) perpendiculaire au plan défini par les deux fentes (12, 15) pour obstruer, soit la fente d'accès (12) par une première exposition stable, soit la fente de traction (15) par une deuxième position stable ; et
- des deuxièmes moyens de rappel élastiques dans les deux positions stables.

5. Crochet selon la revendication 2, caractérisé en ce que les premiers moyens de rappel élastiques comprennent un premier organe de traction monté pivotant par une première extrémité (28) autour d'un deuxième axe (B) solidaire du corps (10) du crochet et fixé par une deuxième extrémité (29) sur le loquet (20), mais sur un troisième axe (C) excentré par rapport au premier axe (A).

6. Crochet selon la revendication 5, caractérisé en ce que des butées en rotation sont prévues pour le loquet (20) sous la forme d'un plot central (50) agissant sur les deux doigts de verrouillage (21G, 21D).

7. Crochet selon la revendication 5, caractérisé en ce que le premier organe de traction comprend un premier ressort (22) travaillant en compression entre deux tubes coulissants concentriques (24, 25) et deux butées (26, 27).

8. Crochet selon la revendication 4, caractérisé en ce que les deuxièmes moyens de rappel élastiques sont constitués d'un organe de traction monté pivotant sur le loquet (20) par une première extrémité (48) et monté fixe sur l'aiguille (40) par une autre extrémité (49).

9. Crochet selon la revendication 8, caractérisé en ce que le deuxième organe de traction est constitué d'un deuxième ressort (42) travaillant en compression entre deux tubes concentriques (43, 44) et coulissants et deux butées (46, 47).

10. Application du crochet selon les revendications 7 et 9 à l'héliportage de nacelles, le premier ressort (22) ayant une force d'environ 75 daN et le deuxième ressort (42) ayant une force d'environ égale à 15 daN.
